# EUROPÄISCHE PATENTANMELDUNG

(11) **EP 0 701 931 A1**
(43) Veröffentlichungstag der Anmeldung: **20.03.1996**
(21) Anmeldenummer: 95111263.0
(22) Anmeldetag: 18.07.1995
(51) Int. Cl.: B60R 22/46

(54) **Gurtstraffer bei Sicherheitsgurtanordnungen in Kraftfahrzeugen**

(30) Priorität: 13.09.1994 DE 4432593
(71) Anmelder: TAKATA (EUROPE) VEHICLE SAFETY TECHNOLOGY GmbH, D-89081 Ulm (DE)
(72) Erfinder: Wifling, Martin, A-8020 Graz (AT); Kopetzky, Robert, D-89173 Lonsee (DE); Wengert, Andreas, D-73572 Heuchlingen (DE); Bannert, Georg, D-88444 Ummendorf (DE); Diepold, Ulrich, D-89081 Ulm (DE); Kempfle, Thomas, D-89346 Bibertal (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Die Erfindung hat einen Gurtstraffer bei Sicherheitsgurtanordnungen in Kraftfahrzeugen mit einem am Fahrzeugchassis zu befestigenden Halter (11) zum Gegenstand, an dem drehbar eine Gurtaufwickelrolle (12) mit einem darauf aufgewickelten Sicherheitsgurt, eine Rückzugsfederanordnung, mittels der der Sicherheitsgurt (13) ständig in Einziehrichtung leicht vorgespannt wird, und mit einem Zusatzantrieb (15) zum Gegenstand, welcher über eine Kupplung (20) von der Gurtaufwickelrolle (12) antriebsmäßig getrennt ist, jedoch bei einer unfallbedingten Beschleunigung schlagartig aktiviert und über die dann eingerückte Kupplung (20) drehfest mit der Gurtaufwickelrolle (12) gekuppelt wird.
Erfindungsgemäß wird die Kupplung (20) durch den bei Auslösung einer Druckquelle (16) erzeugten Druck eingerückt und der Zusatzantrieb (15) durch eine Ventilanordnung (59, 64, 65) noch solange von der Druckquelle (16) getrennt, bis die Kupplung (20) eingerückt ist.

## Beschreibung

Die Erfindung betrifft einen Gurtstraffer bei Sicherheitsgurtanordnungen in Kraftfahrzeugen nach dem Oberbegriff des Patentanspruchs 1.

Es ist bereits bekannt (EP 0 581 288 A1), daß bei derartigen Gurtstraffern zwischen dem Zusatzantrieb und der Gurtaufwickelrolle eine Kupplung anzuordnen ist, die normalerweise ausgerückt ist und erst unmittelbar vor dem Tätigwerden des Zusatzantriebes bei einer unfallbedingten Beschleunigung eingerückt werden soll.

Das Ziel der Erfindung besteht darin, einen weiteren Gurtstraffer der eingangs genannten Gattung zur Verfügung zu stellen.

Zur Lösung dieser Aufgabe sind die Merkmale des kennzeichnenden Teiles des Anspruches 1 vorgesehen.

Der Erfindungsgedanke ist also darin zu sehen, daß durch geeignete Führung der von der Druckquelle zur Verfügung gestellten Druckgase diese zunächst zum Einrücken der Kupplung und erst anschließend zur Beaufschlagung des Zusatzantriebes verwendet werden.

Eine vorteilhafte praktische Ausführungsform ist durch Anspruch 2 gekennzeichnet. Der kolbenartig ausgebildete Schieber, der auch eine Betätigungsstange trägt, wird zunächst allein vom Druck der Druckquelle beaufschlagt, bis die Kupplung eingerückt ist. Anschließend gewährleistet dann die erfindungsgemäße Ventilanordnung die Beaufschlagung des Zusatzantriebes.

Bevorzugt hat der Schieber im Zusammenhang mit dem Einrücken der Kupplung nur eine reine Steuerfunktion, während die eigentliche Einrückkraft nicht von der Druckquelle, insbesondere einer pyrotechnischen Ladung, sondern von einer gesonderten Kraftquelle wie einer Feder zur Verfügung gestellt wird. Auf diese Weise steht die in der Druckquelle gespeicherte bzw. im Moment der Zündung erzeugte Druckgasenergie weitgehend für den Zusatzantrieb zur Verfügung.

Eine besonders kompakte Anordnung wird durch die Ausführungsformen nach Anspruch 3 erzielt.

Eine besonders geringe axiale Ausdehnung sowie eine optimale und sichere Drehmomentübertragung durch die Kupplung ermöglichen die Ausführungsbeispiele nach Anspruch 4, weil hier die Funktionen der Feder und der Kupplungsscheibe in ein und demselben Bauelement vereinigt sind. Hierdurch wird weiter erreicht, daß bei Verdrehung der Kupplungsscheibe zum Einrücken der Kupplung relativ zur Antriebswelle bzw. Antriebsrolle der Drehmomenterzeugungsvorrichtung ein ausreichendes Spiel zur Verfügung steht, damit die Kupplungsscheibe sich ohne Übertragung eines Drehmomentes auf die Antriebswelle bzw. die Antriebsrolle solange verdrehen kann, bis das Einrücken der Kupplung erfolgt ist. Besonders wichtig ist es, daß die Kupplungsscheibe den entgegengesetzten Drehsinn wie die Drehmomenterzeugungsvorrichtung hat.

Eine besonders einfache, gleichwohl aber sehr wirkungsvolle Ausbildung der Ventilanordnung für die Umschaltung des Druckes auf die Drehmomenterzeugungsvorrichtung definiert Anspruch 5. Weiter wird durch diese Maßnahmen die Anordnung des Haupt- und Zusatzantriebes sowie der Kupplung auf der gleichen Stirnseite der Gurtaufwickelrolle ermöglicht. Durch die koaxiale Anordnung aller Bauteile wird eine sehr kompakte Gesamtanordnung erzielt.

Dieser Anspruch definiert außerdem eine besonders zweckmäßige Unterbringung des die Kupplungsscheibe antreibenden Schiebers. Der Schieber wird durch das aufgesetzte Gehäuse des Zusatzantriebs sicher in der Verschiebeausnehmung gehalten.

Durch die Merkmale der Ansprüche 6 bis 8 wird ein sicherer Antrieb der Kupplungsscheibe bei einer unfallbedingten Auslösung erzielt und weiter gewährleistet, daß der Zwangsantrieb der Kupplungsscheibe solange erfolgt, bis das Einrücken der Kupplung erfolgt ist.

Durch die Ausbildung nach Anspruch 9 wird gewährleistet, daß der Drehantrieb der Kupplungsscheibe keinen Einfluß auf die Ausgangsposition der Drehmomenterzeugungsvorrichtung ausübt. Die Erfindung wird im folgenden beispielsweise anhand der Zeichnung beschrieben; in dieser zeigt:
- Fig. 1: eine erste Ausführungsform eines mit einer zündbaren, pyrotechnischen Ladung arbeitenden erfindungsgemäßen Gurtstraffers in perspektivischer Explosionsdarstellung,
- Fig. 2: eine etwas vergrößerte perspektivische Darstellung der gleichen Ausführungsform eines erfindungsgemäßen Gurtstraffers in zusammengebautem Zustand in perspektivischer Ansicht von der entgegengesetzten Seite wie in Fig. 1,
- Fig. 3: eine mehr von der Seite des Zusatzantriebs her gesehene perspektivische Ansicht des gleichen Gegenstandes, wobei jedoch zum Zwecke der Veranschaulichung die eine stirnseitige Abdeckung des Bandlaufraumes und die Rückzugsfederanordnung fortgelassen sind, und zwar in der Ausgangsposition unmittelbar nach dem Beginn der Zündung der pyrotechnischen Ladung,
- Fig. 4: eine entsprechende Ansicht wie Fig. 3, jedoch während eines bereits in Gang befindlichen Gurtstraffvorganges,
- Fig. 5: eine Stirnansicht einer weiteren bevorzugten Ausführungsform eines einen Bandlaufraum enthaltenden Gehäuses eines Gurtstraffers bei abgenommener Stirnabdeckung,
- Fig. 5a: einen vergrößerten Ausschnitt aus Fig. 5 mit einer anderen Ausführungsform der lösbaren Befestigung der Dichtwände am Gehäuse,
- Fig. 6: einen Schnitt nach Linie VI-VI in Fig. 5,
- Fig. 7: eine vergrößerte Ausschnitts-Stirnansicht einer bevorzugten Ausbildung der Antriebsrolle eines erfindungsgemäßen Gurtstraffers im Bereich der Zugband-Einhängestelle,
- Fig. 8: einen vergrößerten Ausschnitt des mit einer Einhänge-Federzunge versehenen Endbereiches eines Zugbandes für das Einhängen in eine Umfangsvertiefung der Antriebsrolle nach Fig.7,
- Fig. 9: eine perspektivische Ansicht des erfindungsgemäßen Gurtstraffers analog den Fig. 3 und 4, wobei jedoch außer der Rückzugsfederanordnung auch noch der Zusatzantrieb bis auf die Antriebswelle und die Antriebsrolle weggelassen sind, wodurch das Innere der Kupplung zu erkennen ist, wobei die Kupplung im ausgerückten Normalzustand gezeigt ist,
- Fig. 10: eine Axialansicht einer ähnlichen Ausführungsform der Kupplung und der für sie vorgesehenen Antriebsmittel ebenfalls in der ausgerückten Position der Kupplung,
- Fig. 11: eine ähnliche perspektivische Ansicht wie Fig. 9, jedoch während des Einrückvorganges der Kupplung,
- Fig. 12: einen Teillängsschnitt der Ausführungsform nach Fig. 10, wobei außerdem die Gurtaufwickelrolle dargestellt ist,
- Fig. 13: eine Stirnansicht des Gegenstandes der Fig. 12 bei abgenommenem Zusatzantrieb, wobei auch diese Ausführungsformen die Kupplung während des Einrückvorganges, und zwar kurz vor der Freigabe der federnden Kupplungsscheibe dargestellt ist,
- Fig.13a: einen Schnitt nach Linie XIIIa-XIIIa in Fig. 13,
- Fig. 14: eine ähnliche perspektivische Ansicht wie die Fig. 9 und 11, wobei die Kupplung im volleingerückten Zustand und die Ventilanordnung in der Umschaltstellung zur Beaufschlagung der Drehmomenterzeugungsvorrichtung gezeigt sind,
- Fig. 15: einen Teillängsschnitt analog Fig. 12, wobei jedoch die Kupplungsscheibe im volleingerückten Zustand wiedergegeben ist, und
- Fig. 16: eine Stirnansicht der Kupplung von Fig. 15.

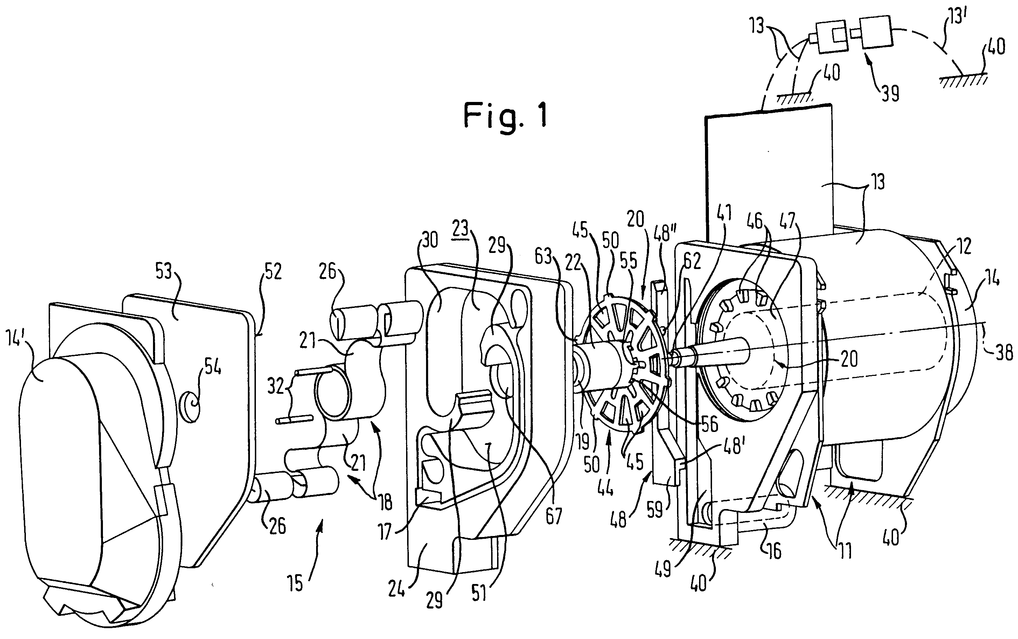

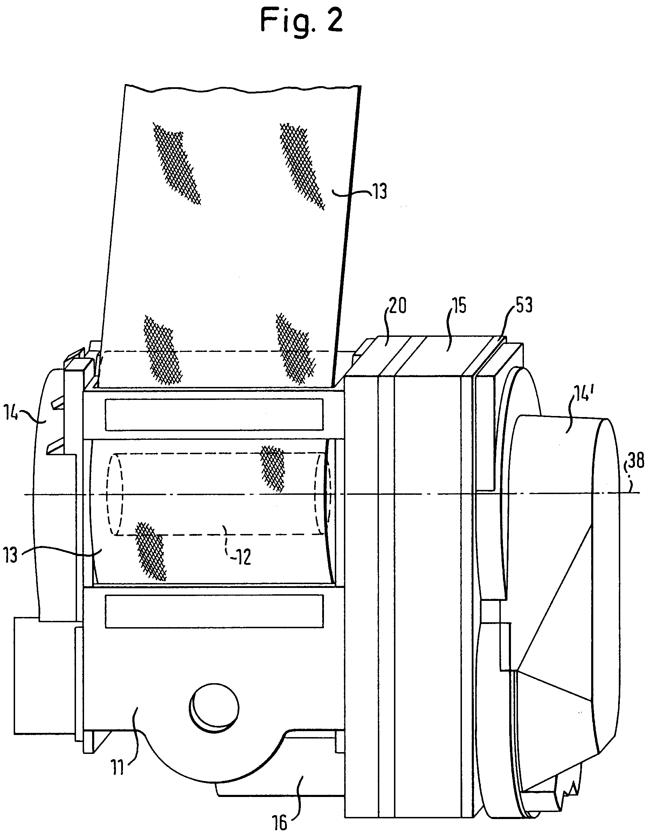

Nach den Fig. 1 und 2 besitzt ein erfindungsgemäßer Gurtstraffer einen beispielsweise im Bodenbereich eines Fahrgastraumes am Fahrzeugchassis 40 zu befestigenden Halter 11, an dem um eine zentrale Achse 38 drehbar eine Gurtaufwickelrolle 12 angebracht ist, auf die ein Sicherheitsgurt 13 aufgewickelt ist, der sich in der in Fig. 1 nur gestrichelt angedeuteten Weise über ein Gurtschloß 39 und z.B. ein Drahtseil 13' zu einer anderen Stelle des Fahrzeugchassis 40 erstreckt, wobei sich der Sicherheitsgurt 13 in üblicher Weise an den nicht dargestellten Körper eines Fahrzeuginsassen anlegt. Weiter ist rechts oben in Fig. 1 strichpunktiert angedeutet, daß der Sicherheitsgurt 13 auch Bestandteil einer Dreipunkt-Gurtanordnung sein kann.

An der einen Stirnseite der Gurtaufwickelrolle 12 befindet sich eine übliche Rückzugsfederanordnung 14, in der eine nicht dargestellte Rückzugsfeder vorgesehen ist, die auf die Gurtaufwickelrolle 12 ein leichtes Gurt-Einzugsdrehmoment ausübt, so daß der vom Fahrzeuginsassen ausgezogene und angelegte Sicherheitsgurt sich soweit auf die Gurtaufwickelrolle 12 aufrollt, daß er locker am Körper des Fahrzeuginsassen anliegt. Weiter ist insbesondere zwischen dem Halter 11 und der Gurtaufwickelrolle 12 eine übliche und nicht dargestellte Gurtauszugssperre vorgesehen, welche bei einem plötzlichen Anziehen des Sicherheitsgurtes 13 oder bei unfallbedingten Beschleunigungen wirksam wird und die Gurtaufwickelrolle 12 in der dann vorliegenden Aus- bzw. Einzugsposition festlegt, so daß ein Ausziehen des Sicherheitsgurtes 13 verhindert ist.

Die Rückzugsfederanordnung kann auch an der in den Fig. 1 und 2 mit 14' bezeichneten Stirnseite der Gurtaufwickelrolle 12 bzw. des Halters 11 vorgesehen sein, wozu sich eine in Fig. 1 bei 41 angedeutete Innenwelle 41 drehbar durch entsprechende zentrale Bohrungen eines im folgenden zu beschreibenden Zusatzantriebs 15 und einer Kupplung 20 hindurcherstrecken muß. Die Anordnung der Rückzugsfederanordnung bei 14' hat den Vorteil, daß sowohl der normale als auch der Zusatzantrieb der Gurtaufwickelrolle 14 von der gleichen Stirnseite her erfolgen.

Nach den Fig. 1 und 2 sind zwischen der bevorzugt bei 14' angeordneten Rückzugsfederanordnung und dem Halter 11 bzw. der Gurtaufwickelrolle 12 ein Zusatzantrieb 15 und eine Kupplung 20 angeordnet, die im folgenden anhand der Fig. 2 bis 8 im einzelnen beschrieben werden.

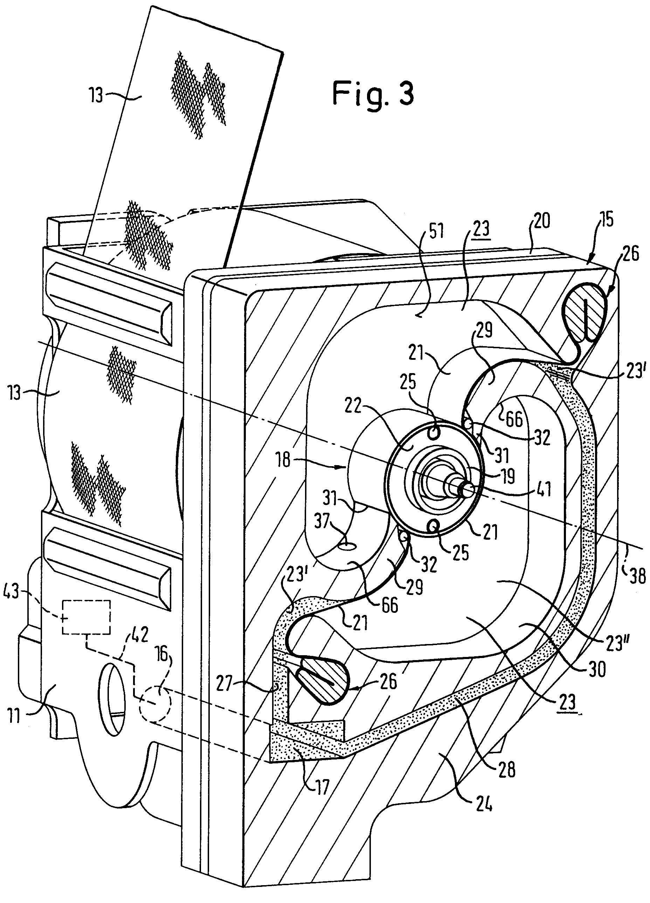

Nach Fig. 1 und 3 besitzt der Zusatzantrieb 15 eine mit der Drehachse 38 der Gurtaufwickelrolle 12 koaxiale Antriebswelle 19, auf der konzentrisch eine Antriebsrolle 22 drehfest befestigt ist. Auf die Antriebsrolle 19 sind in der Ansicht der Fig. 1,3 entgegen dem Uhrzeigersinn übereinander zwei aus Federstahlblech von etwa 0,2 mm Dicke bestehende Zugbänder 21 aufgewickelt, die an Befestigungsstellen 26 am Umfang der Antriebsrolle 22 drehfest mit dieser verbunden sind.

In der in Fig. 1, 3 dargestellten Ausgangsposition sind jeweils drei bis vier Lagen eines jeden Zugbandes 21 auf die Antriebsrolle 22 aufgewickelt. Danach erstreckt sich jedes Zugband 21 bogenförmig durch jeweils einen von zwei die Antriebsrolle 22 umgebenden Bandlaufräumen 23 zu jeweils einer Befestigungsstelle 26 am die Umfangswand 30 der Bandlaufräume 23 umgebenden Gehäuses 24.

Der bogenförmig ausgebildete Teil der Zugbänder 21 liegt mit seiner konkaven Fläche in der aus Fig.3 ersichtlichen Ausgangsposition des Gurtstraffers an in radialer Richtung gekrümmt ausgebildeten Dichtwänden 29 an, die mit dem Gehäuse 24 einstückig ausgebildet sind und sich sichelförmig im wesentlichen radial nach innen zu den auf die Antriebsrolle 22 aufgewickelten Lagen der Zugbänder 21 erstreckt und dort eine sich verjüngende Dichtlippe 31 bildet, die eine Dichtverbindung mit den aufgewickelten Zugbändern 21 gewährleistet.

Im Bereich der Dichtlippen 31 sind zwischen jeder Dichtwand 29 und dem daraufliegenden Zugband 21 stabförmige Dichtelemente 32 angeordnet, welche sich über die gesamte Tiefe der im wesentlichen ebene Stirnwände 51, 52 aufweisenden Bandlaufräume 23 erstrecken. Während die der Gurtaufwickelrolle 12 zugewandte ebene Stirnwand 51, die eine zentrale Durchgangsbohrung 67 besitzt, ebenso wie die Umfangswand 30 einen festen Bestandteil des Gehäuses 24 der Drehmomenterzeugungsvorrichtung 18 bildet, befindet sich die axial gegenüberliegende Stirnwand 52 nach Fig. 1 an einem Deckel 53, der auf die offene Seite des Gehäuses 24 aufsetzbar sowie an ihm befestigbar ist und eine zentrale Bohrung 54 für den Durchgang der Innenwelle 41 zur Rückzugsfederanordnung 14' aufweist. Die Breite der Zugbänder 21 ist so groß, daß sie dichtend und gleitend an den Stirnwänden 51, 52 anliegen und so die Bandlaufräume 23 in zwei durch die Zugbänder 21 gegeneinander abgedichtete Teilräume 23', 23'' unterteilen.

Im Bereich der an der Umfangswand 30 befindlichen Wurzeln der Dichtwände 29 münden auf der konvexen Seite der Dichtwände 29 Verzweigungsleitungen 27 bzw. 28, die von einem gemeinsamen Druckraum 17 ausgehen, der von einer Druckquelle 16 beaufschlagbar ist. Die Druckquelle 16 ist über eine in Fig.3 gestrichelt angedeutete Steuerleitung 42 mit einem ebenfalls nur gestrichelt angedeuteten Beschleunigungssensor 43 verbunden, der bei einer unfallbedingten Fahrzeugbeschleunigung eine pyrotechnische Ladung in der Druckquelle 16 zündet, so daß im Druckraum 17 schlagartig ein Druck aufgebaut werden kann. Auf der konkaven Seite der Dichtwände 29 sind zur umgebenden Atmosphäre führende Entlüftungsöffnungen 37 vorgesehen, die beim Auslösen des Zusatzantriebes einen übermäßigen Druckaufbau in den Teilräumen 23'' verhindern.

Die Verzweigungsleitungen 27, 28 münden derart an den Band-laufräumen 23, daß sie die sich am Umfang der Bandlaufräume 23 quer über die Mündung der Verzweigungsleitungen 27, 28 erstreckenden Zugbänder 41 mit Druck beaufschlagen können.

Durch die beschriebene Anordnung wird eine Drehmomenterzeugungsvorrichtung 18 gebildet, welche bei Zündung der pyrotechnischen Ladung 16 die Antriebswelle 19, die zur Aufnahme der Innenwelle 21 hohl ausgebildet ist, in Gurtaufwickelrichtung antreibt, wie das weiter unten bei der Funktionsbeschreibung im einzelnen erläutert wird.

Zwischen dem Zusatzantrieb 15 mit der Drehmomenterzeugungsvorrichtung 18 und der Gurtaufwickelrolle 12 ist eine im folgenden anhand der Fig. 1 und 9 bis 16 beschriebene Kupplung 20 vorgesehen, die normalerweise ausgerückt ist, um ein ungehindertes Zusammenspiel zwischen der Rückzugsfederanordnung 14' und der Gurtaufwickelrolle 12 über die Innenwelle 41 zu gewährleisten. Erst dann, wenn eine unfallbedingte Beschleunigung auftritt und die Drehmomenterzeugungsvorrichtung 18 den Gurt 13 schlagartig straffen soll, muß die Kupplung 20 einrücken, um das Drehmoment auf die Gurtaufwickelrolle 12 übertragen zu können.

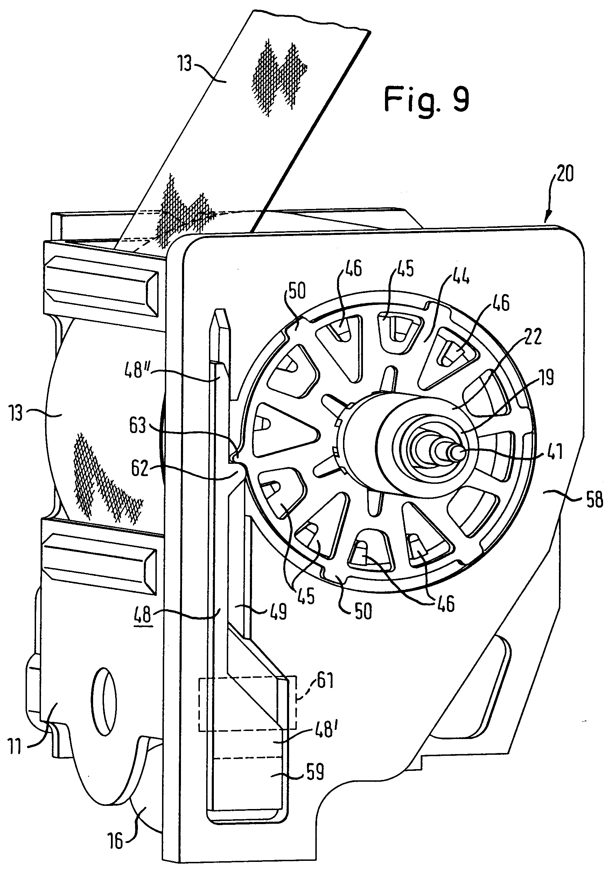

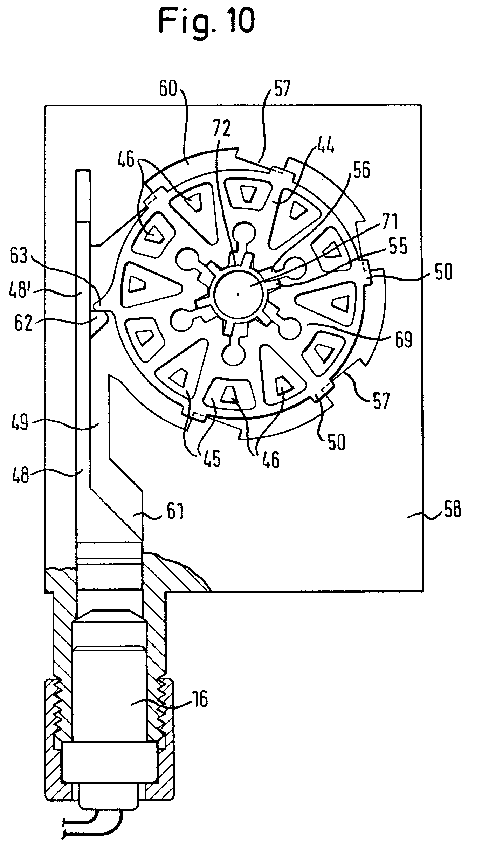

Nach den Fig. 1 und 9, 10 ist die Antriebsrolle 22 an ihrer von der Drehmomenterzeugungsvorrichtung 18 axial abgewandten Seite mit axial (Fig. 9) oder radial (Fig. 10) vorspringenden Keilnocken 55 versehen, welche in dazu komplementäre Umfangsschlitze 56 am Außenrand einer zentralen Bohrung 71 einer Kupplungsscheibe 44 derart eingreifen, daß in Umfangsrichtung zwar ein bestimmtes Spiel zwischen den Keilnocken 55 und den Umfangsberandungen der Umfangsschlitze 56 besteht, daß jedoch die Antriebsrolle 22 nach Überwindung dieses Spiels die Kupplungsscheibe 44 zu einer Drehbewegung mitnimmt.

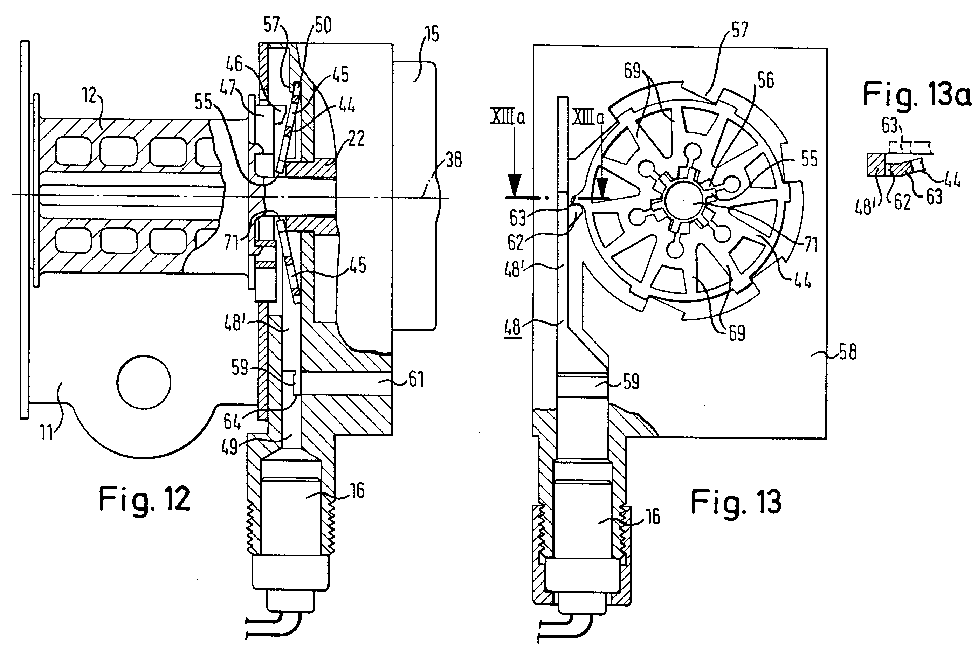

Auf ihrem Außenumfang weist die Kupplungsscheibe 44 nach den Fig. 1, 9 und 10 radial nach außen vorspringende und über ihren Umfang verteilte Haltenocken 50 auf, die nach den Fig. 10 und 12 hinter vom Kupplungsgehäuse 58 radial nach innen in den Aufnahmehohlraum 60 für die Kupplungsscheibe 44 vorspringende Gegennocken 57 greifen, derart, daß die von der Stirnrolle der Antriebsrolle 22 oder eines an ihr befestigten Zwischenstückes in Richtung der Gurtaufwickelrolle 12 vorgeschobene Kupplungsscheibe 44 radial außen zunächst gegen eine derartige Axialverschiebung festgehalten wird. Die aus federndem Material, insbesondere Federstahl bestehende Kupplungsscheibe 44 ist dabei gemäß Fig. 12 federnd konisch verformt.

Nach den Fig. 1, 9, 10 und 12 besitzt die Kupplungsscheibe in ihrem radial äußeren Bereich, jedoch radial innen von den Haltenocken 50 Eingriffsausnehmungen 45, die über den Umfang gleichmäßig verteilt sind. Diesen Eingriffsausnehmungen 45 sind an der der Drehmomenterzeugungsvorrichtung 18 axial zugewandten Stirnführungsscheibe 47 der Gurtaufwickelrolle 12 axial vorstehende Eingriffsnocken 46 zugeordnet, die jedoch in der Position der Kupplungsscheibe 44, wo ihre Haltenocken hinter die Gegennocken 57 greifen, außer Eingriff mit den Eingriffsausnehmungen 45 sind (Fig. 12).

Aufgrund der beschriebenen Anordnung befindet sich die Kupplungsscheibe 44 normalerweise in der aus Fig. 12 ersichtlichen ausgerückten Position, so daß die Gurtaufwickelrolle 12 sich ungehindert von der Antriebsrolle 22 frei drehen kann und nur mit der Rückzugsfederanordnung 14' über die Innenwelle 41 zusammenwirkt, die sich durch die Bohrungen 67, 71 und 72 erstreckt.

Um die Kupplung 20 einzurücken, ist nach den Fig. 1, 9 und 10 neben der Kupplungsscheibe 44 im Kupplungsgehäuse 58 eine Verschiebeausnehmung 49 angeordnet, die im wesentlichen tangential zur Kupplungsscheibe 44 verläuft. In der Verschiebeausnehmung 49 ist ein ebenfalls tangential verlaufender und in der Verschiebeausnehmung 49 tangential zur Kupplungsscheibe 44 verschiebbarer Schieber 48 angeordnet.

Der Schieber 48 weist oben eine Betätigungsstange 48'' und unten einen erweiterten Kolbenbereich 48' mit einer abbrechbaren Ventilwand 59 auf. Unterhalb der unteren Stirnseite des Kolbenbereiches 48' befindet sich die pyrotechnische Ladung 16. Von der Verschiebeausnehmung 49 zweigt in Richtung der Drehmomenterzeugungsvorrichtung 18 ein Druckkanal 61 ab (Fig. 12), der mit dem Druckraum 17 in Strömungsverbindung steht.

Bei in der Ausgangsposition befindlichem Schieber 48 (Fig.9, 10) versperrt der Kolbenbereich 48' die Verbindung zwischen der pyrotechnischen Ladung 16 und dem Druckkanal 61.

Im oberen Bereich radial gegenüber der Kupplungsscheibe 44 besitzt die Betätigungsstange 48'' des Schiebers 48 einen in Richtung auf die Kupplungsscheibe 44 vorspringenden Anschlag 62, der mit einem am Umfang der Kupplungsscheibe 44 vorgesehenen Gegenanschlag 63 gemäß Fig.9 und 10 derart in Eingriff steht, daß bei einem Verschieben des Schiebers 48 nach oben die Kupplungsscheibe 44 im Uhrzeigersinn verdreht wird.

Die im allgemeinen zylindrisch ausgebildete pyrotechnische Ladung 16 kann gemäß den Fig. 1 bis 4 und 9 auf der der Gurtaufwickelrolle 12 zugewandten Seite der Kupplung 20 parallel zu und unter der Gurtaufwickelrolle 12 oder aber gemäß Fig. 10 in axialer Verlängerung der Verschiebeausnehmung 49 unterhalb der Kupplung 20 angeordnet sein. Wesentlich ist lediglich, daß bei Zündung der pyrotechnischen Ladung 16 zunächst nur der Schieber 48 und erst nach Einrücken der Kupplung 20 auch die Drehmomenterzeugungsvorrichtung 18 mit Druck beaufschlagt wird.

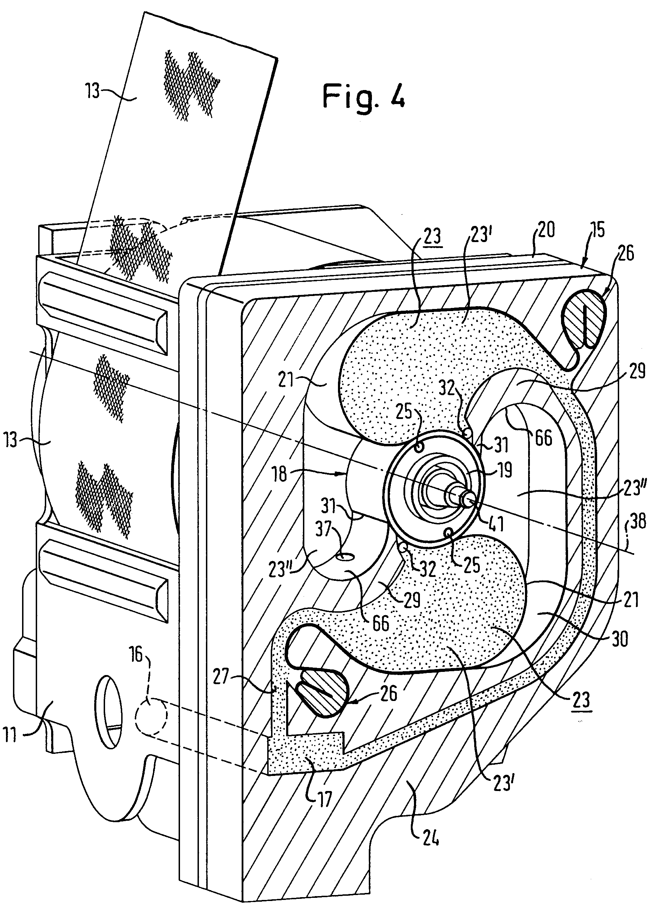

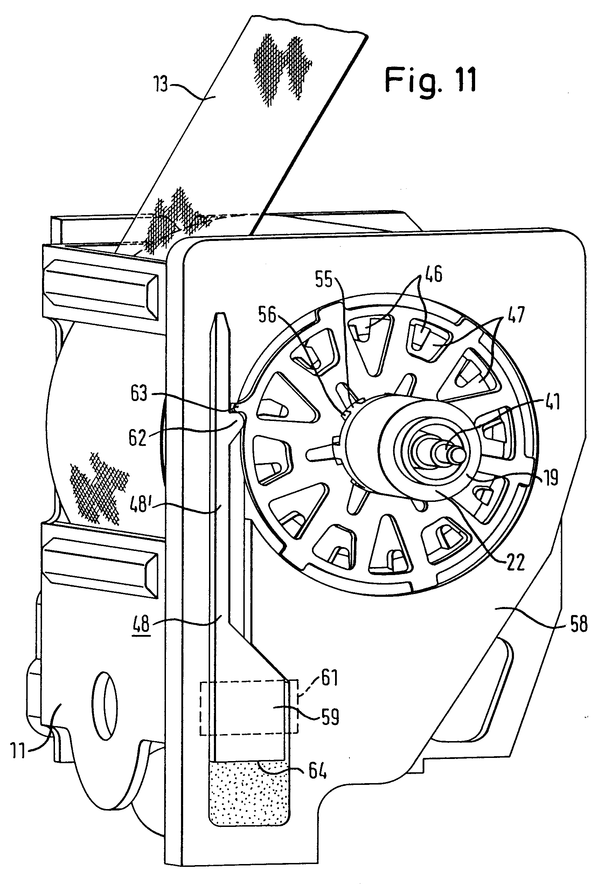

Die Arbeitsweise des betriebenen Gurtstraffers ist wie folgt:
Wenn der Beschleunigungssensors 43 (Fig. 3) eine unfallbedingte Beschleunigung am Fahrzeug feststellt, löst er über die Steuerleitung 42 die pyrotechnische Ladung 16 aus. Daraufhin beaufschlagt diese zunächst nicht, wie das in den Fig. 3 und 4 aus Veranschaulichungsgründen wiedergegeben ist, die Drehmomenterzeugungsvorrichtung 18, sondern nach Fig.9 und 10 zunächst nur den Kolbenbereich 48' des Schiebers 48, so daß dieser aus der Position nach den Fig. 9, 10 in die nach den Fig.11 bis 13 verschoben wird und dabei die Kupplungsscheibe 44 zu einer Drehbewegung mitnimmt.

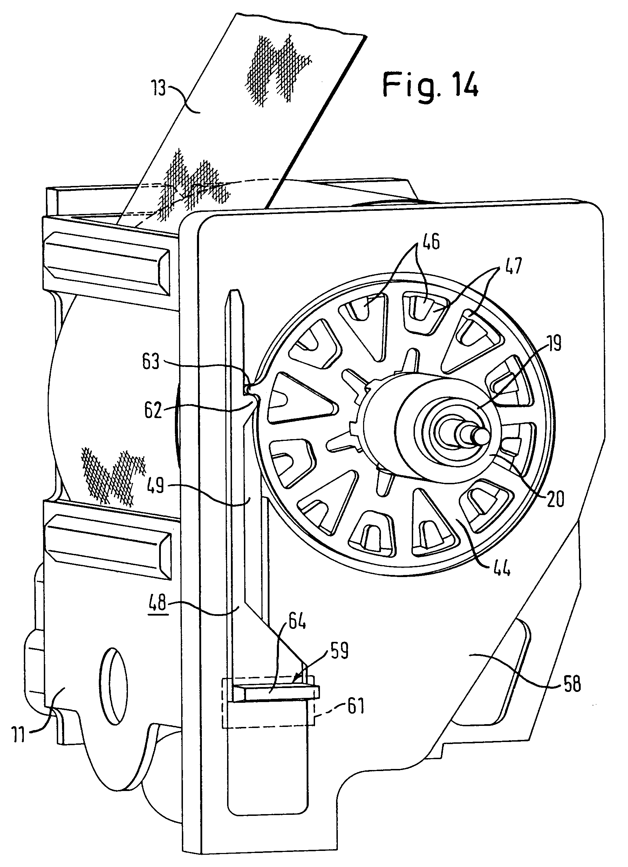

Dadurch verschieben sich die Haltenocken 50 der Kupplungsscheibe 44 in Umfangsrichtung entlang der feststehenden Gegennocken 57, bis sie in der Position nach den Fig. 14 bis 16 außer Eingriff miteinander kommen.

Der Verschiebeweg des Schiebers 48 und die Drehbewegung der Kupplungsscheibe 44 sind so berechnet, daß im ersten Stadium der Bewegung die Haltenocken 50 und die Gegennocken 57 außer Eingriff kommen, worauf die Kupplungsscheibe 44 in Richtung der Stirnführungsscheibe 47 schnappt. Hierbei können die Eingriffsnocken 46 in die Eingriffsausnehmungen 45 eingreifen, wenn diese beiden Elemente zufällig axial ausgerichtet sein sollten. Sofern dies noch nicht der Fall sein sollte, legen sich die Stege 69 der Kupplungsscheibe 44 an die Eingriffsnocken 46 an. Nunmehr wird die Kupplungsscheibe 44 in einem zweiten Stadium der Bewegung des Schiebers 48 weitergedreht, bis schließlich die Eingriffsausnehmungen 45 über die Eingriffsnocken 46 schnappen.

Die Umfangsschlitze 56 im Bereich der Zentralbohrung 72 müssen eine die beiden Bewegungsstadien ermöglichende Drehung der Kupplungsscheibe 44 relativ zur Antriebsrolle 22 bzw. den Keilnocken 55 zulassen.

Aufgrund der beschriebenen Ausbildung der Kupplung 20 mit zahlreichen über den Umfang verteilten Eingriffsausnehmungen 45 und Eingriffsnocken 46 wird dem Erfordernis der Übertragung erheblicher Drehmomente über die Kupplung 20 Rechnung getragen.

Im einzelnen geht das Einrücken der Kupplung 20 wie folgt vor sich:
Wie aus Fig. 1 hervorgeht, dreht der beim Zünden der Ladung 16 tangential vorgeschobene Schieber 48 die Kupplungsscheibe 44 zwecks Eingriffs mit der Stirnführungsscheibe 47 genau in der entgegengesetzten Richtung, wie die Kupplungsscheibe 44 anschließend durch die Drehmomenterzeugungsvorrichtung 18 gedreht wird. Diese entgegengesetzten Drehrichtungen sind wichtig, damit beim Verdrehen der Kupplungsscheibe 44 nicht durch Reibung oder formschlüssigen Eingriff die Antriebswelle 19 bzw. die Antriebsrolle 22 mitgedreht wird. In der Grundposition vor der Auslösung der pyrotechnischen Ladung 16 muß die Kupplungsscheibe 44 relativ zur Antriebsrolle 22 so stehen, daß der gesamte, durch die Umfangsschlitze 56 zur Verfügung gestellte freie Drehbereich der Kupplungsscheibe 44 relativ zur Antriebsrolle 22 zur Verfügung steht.

Ein besonders wichtiger Gesichtspunkt der Erfindung besteht darin, wie dafür gesorgt wird, daß die Eingriffsausnehmungen 45 und die Eingriffsnocken 46 bei einem Einrückvorgang der Kupplung 20 sicher in Eingriff kommen.

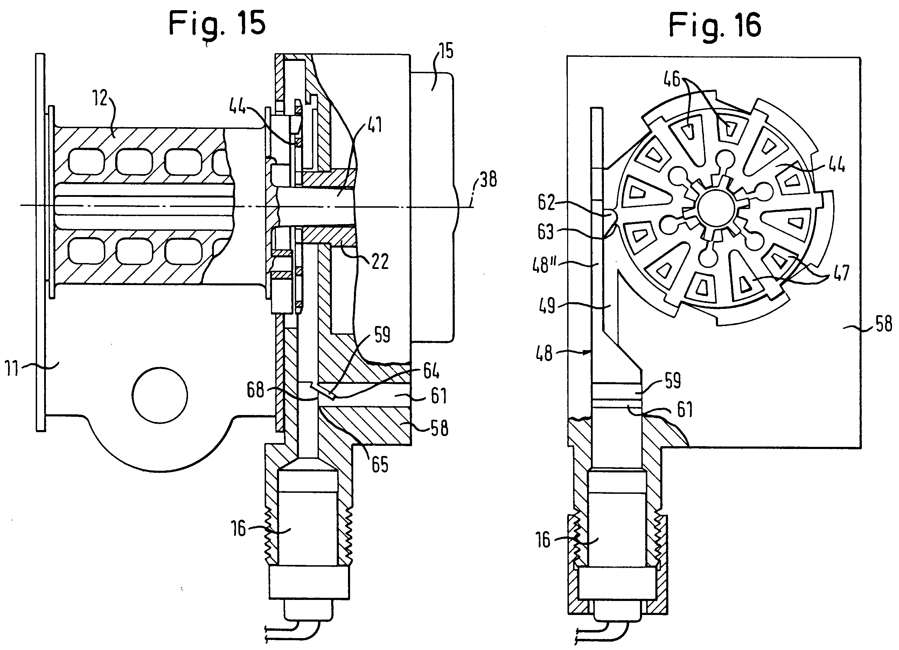

Zu diesem Zweck ist die Ausbildung so, daß der Anschlag 62 am Schieber 48 und der Gegenanschlag 63 an der Kupplungsscheibe 44 solange in Eingriff bleiben, bis die Kupplungsscheibe 44 über die Eingriffsnocken 46 geschnappt ist. Mit anderen Worten bleiben die Anschläge 62, 63 auch dann noch in Eingriff, wenn sich die Haltenocken 50 beim Drehen der Kupplungsscheibe 44 durch den Schieber 48 von den Gegennocken 57 am Kupplungsgehäuse 58 gelöst haben. In diesem Fall schnappt die federnde Kupplungsscheibe 44 aus der in Fig. 12 ersichtlichen konischen Position zwar etwas in Richtung der Gurtaufwickelrolle 12, jedoch nur so weit, daß - wenn die Eingriffsnocken 46 und die Eingriffsausnehmungen 45 noch nicht axial ausgerichtet sind - die Stege 69 zwischen den Eingriffsausnehmungen 45 auf den Eingriffsnocken 46 zur Anlage kommen. Der Anschlag 62 am Schieber 48 ist nun in Richtung der Federbewegung der Kupplungsscheibe 44 so breit ausgebildet, daß er auch dann noch in Eingriff mit dem Gegenanschlag 63 bleibt, wenn der Bajonettverschluß 50, 57 gelöst und die Stege 69 an den Eingriffsnocken 46 zur Anlage kommen. Auf diese Weise wird nun durch den fortgesetzten Vorschub des Schiebers 48 die Kupplungsscheibe 44 weitergedreht, bis die Eingriffsausnehmungen 45 über die Eingriffsnocken 46 schnappen. Nunmehr nimmt die Kupplungsscheibe 44 die aus Fig. 15 ersichtliche ebene Form an, die in Fig. 13a gestrichelt dargestellt ist. In dieser Position ist nun der Gegenanschlag 63 axial vom Anschlag 62 der Betätigungsstange 48' abgehoben, so daß der Schieber 48 und die Kupplungsscheibe 44 nunmehr außer Eingriff sind und der Schieber 48 jetzt ohne Arbeitsleistung nur noch so weit bis zum Ende des Verschiebeweges vorgeschoben wird, bis die Ventilwand 59 sich vor dem Druckkanal 61 befindet und dann durch den Druck der Druckquelle 16 abgebrochen wird, um den Strömungsweg von der Druckquelle 16 zum Druckraum 17 freizumachen.

Die Erfindung führt also nicht nur zu einer gegenseitigen Annäherung der beiden Kupplungsteile 44, 47, sondern sichert auch einen einwandfreien Klaueneingriff. In Fig. 13a ist die Bewegungsrichtung der radial äußeren Bereiche der Kupplungsscheibe 44 beim Aufschnappen der Eingriffsausnehmungen 45 über die Eingriffsnocken 46 durch einen Pfeil angedeutet.

Aufgrund der erfindungsgemäßen Ausbildung wird gewährleistet, daß die Kupplung 20 sicher eingerückt ist, bevor die Drehmomenterzeugungsvorrichtung 18 mit dem Druck der Druckquelle 16 beaufschlagt wird.

Der besondere Vorteil der Verwendung einer federnden Kupplungsscheibe, die nach Art einer Tellerfeder ausgebildet ist, besteht darin, daß sie kaum axialen Bauraum benötigt und gleichwohl ein sicheres Aus- und Einrücken der Kupplung 20 ermöglicht.

Aufgrund der ihr innewohnenden Federeigenschaften schnappt also die zunächst gemäß Fig. 12 konisch verformte Kupplungsscheibe 44 schließlich in die aus den Fig. 15 und 16 ersichtliche ebene Position, in welcher die Eingriffsnocken 46 in die Eingriffsausnehmungen 45 axial eingreifen und so eine gegebenenfalls etwas Umfangsspiel aufweisende, drehfeste Verbindung zwischen der Antriebsrolle 22 und der Gurtaufwickelrolle 12 herstellen.

In dieser am weitesten vorgeschobenen Position des Schiebers 48 hat sich die abbrechbare Ventilwand 59 gerade vor den Eingang des Druckkanals 61 geschoben (Fig. 11, 12).

Wichtig ist nun, daß der untere Rand 64 der Ventilwand 59 sich in der oberen Endposition des Schiebers 48 etwas oberhalb der unteren Begrenzung 65 des Druckkanals 61 befindet, wodurch aufgrund des in der Verschiebeausnehmung 49 erzeugten Explosionsdruckes in Richtung des Druckkanals 61 ein solcher Druck auf die abbrechbare Ventilwand 59 ausgeübt wird, daß diese in den Druckkanal 61 hinein abbricht, wie das in den Fig. 14 und 15 dargestellt ist.

Nunmehr kann sich der von der pyrotechnischen Ladung 16 erzeugte Explosionsdruck über den Druckkanal 61 in dem Druckraum 17 und von diesem aus durch die Verzweigungsleitungen 27, 28 in die Teilräume 23' ausbreiten (Fig. 3)

Der Druckaufbau ist in den Fig. 3 und 4 durch eine Punktung der betreffenden Räume angedeutet.

Aufgrund des Druckaufbaus in den Verzweigungsleitungen 27, 28 wird auf die konkave Seite der Zugbänder 21 eine entsprechende Druckkraft ausgeübt, welche ein Drehmoment an der Antriebsrolle 22 in Fig. 3 entgegen dem Uhrzeigersinn bewirkt.

Hierdurch dreht sich die Antriebsrolle 22, während sich das abgerollte Zugband 21 zunehmend dicht an die Umfangswand 30 der beiden Bandlaufräume 23 anlegt.

Da der frei durchhängende Bereich des Zugbandes 21 aufgrund der speziellen Ausbildung der Bandlaufräume 23 nach Fig.4 zunächst vergleichsweise kurz ist, ist die auf das Band übertragene Druckkraft zunächst ebenfalls noch relativ klein.

Erweitert sich dann aber der Bandlaufraum 23, wie das in Fig.4 gezeigt ist, vergrößert sich die effektive durchhängende Fläche des Zugbandes 21, wodurch die auf es ausgeübte Druckkraft entsprechend ansteigt und damit das auf die Antriebsrolle 22 ausgeübte Drehmoment.

Im weiteren Verlauf der Bewegung gelangt dann der bogenförmige Teil des Zugbandes 21 in den wieder schmaler werdenden Endbereich der Bandlaufräume 23, wodurch am Schluß der Gurtstraffung schließlich wieder eine geringere Antriebskraft auf die Antriebsrolle 22 ausgeübt wird.

Am Schluß der Bewegung liegt der gekrümmte Teil des Zugbandes 21 an dem konkav gekrümmten Endbereich 66 der Bandlaufräume 23 an. Nunmehr ist der Bewegungsspielraum der Zugbänder 21 erschöpft und der Gurt 13 um den Maximalwert von beispielsweise 205 mm eingezogen.

Bei der Position der Zugbänder 21 gemäß Fig. 4 beträgt die bis dahin eingezogene Länge des Sicherheitsgurtes 13 ca. 140 mm.

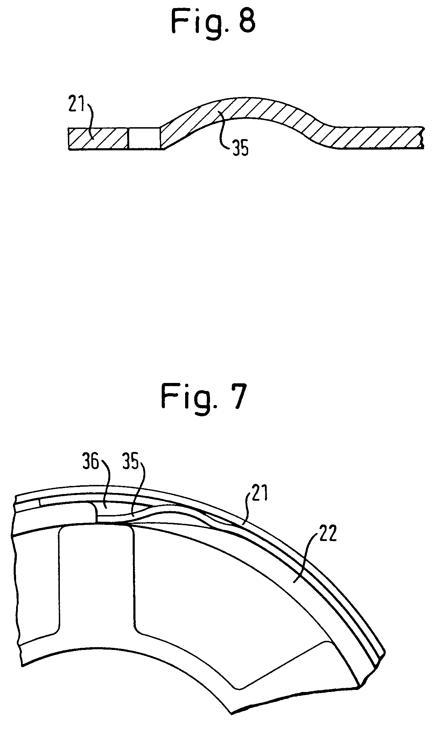

Wenn nun die Druckkraft in den Teilräumen 23' wegen des Verbrauchs der pyrotechnischen Ladung abfällt, werden die noch auf der Antriebsrolle 22 befindlichen vorzugsweise ein bis zwei Windungen des aus Federstahl bestehenden Zugbandes 21 locker, worauf die gemäß Fig. 7 durch den auf das Zugband 21 ausgeübte Zugkraft in eine Umfangsvertiefung 36 hineingedrückte Federzunge 35 aufgrund der ihr innewohnenden Federkraft die losen Lagen des Zugbandes 21 nach außen drückt und eine aus Fig. 8 ersichtliche entspannte Position einnimmt, in der der Mitnahmeeingriff zwischen dem mit der Federzunge 35 ausgestatteten Ende des Zugbandes 21 und der Antriebsrolle 22 aufgehoben ist.

Nunmehr kann sich die Antriebsrolle 22 bei geschlossen bleibender Kupplung 20 unter dem Einfluß von Auszugs- und Einzugsbewegungen des Sicherheitsgurtes 13 ungehindert mitdrehen. Dadurch ist nach wie vor die normale Funktion des Gurtaus- und -einrollmechanismus mittels der Rückzugsfederanordnung 14' gewährleistet.

Wenn der Gurt 13 beispielsweise in der Position nach Fig.4 oder bei noch weiter abgerollten Zugbändern 21 optimal gestrafft ist und der Druck der pyrotechnischen Ladung 16 nachläßt, vollzieht die nicht dargestellte Feststellanordnung zwischen dem Halter 11 und der Gurtaufwickelrolle 12 nach wie vor die Sperrung einer Auszugsbewegung, was wichtig ist, weil ja der Fahrzeuginsasse nach der schlagartigen Straffung des Gurtes 13 in diesen hineinfällt und ein Ausziehen des Gurtes dabei sicher verhindert werden muß.

Die Erfindung schafft somit einen äußerst kompakten Gurtstraffer, bei dem mittels ein- und derselben pyrotechnischen Ladung zunächst das Einrücken der Kupplung und dann das Straffen des Gurtes gewährleistet wird.

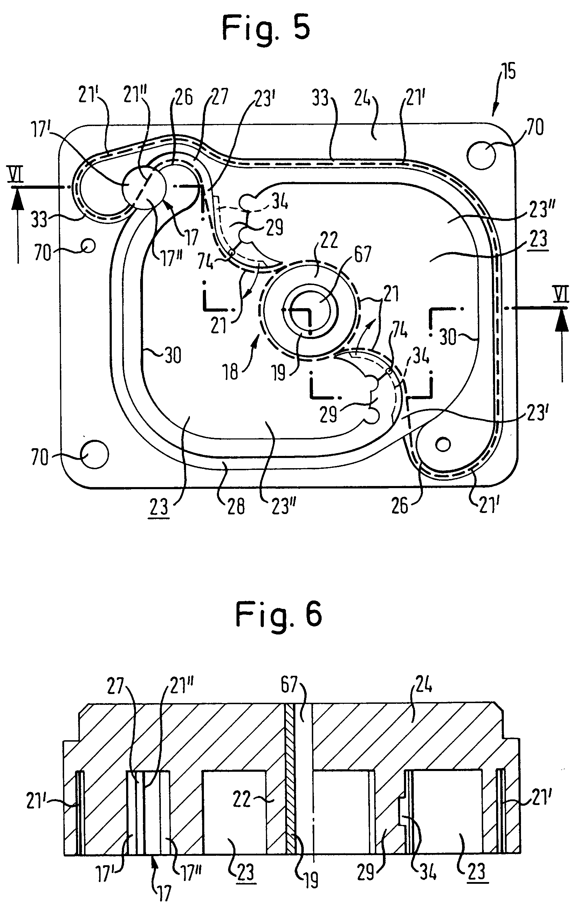

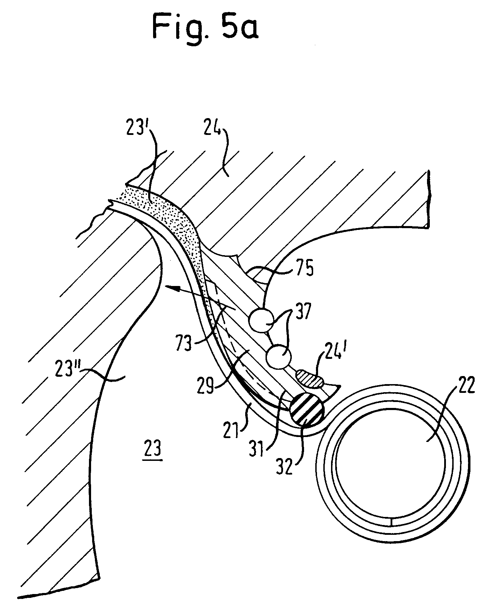

Die Ausführungsform nach Fig. 5 und 6 unterscheidet sich von der nach den Fig. 1 bis 4 dadurch, daß die beiden nur gestrichelt angedeuteten Zugbänder 21 zu einem einzigen durchgehenden Band vereinigt sind und außerhalb der Befestigungsstellen 26 am Gehäuse durch einen Bandkanal 33 geführt sind.

Aus diesem Grunde werden die bei einer Druckbeaufschlagung der Drehmomenterzeugungsvorrichtung 18 an den Zugbändern 21 auftretenden Kräfte im Bereich der Befestigungsstellen 26 nur insoweit auf das Gehäuse 24 übertragen, als die das Band 21 aufnehmenden Kanäle gekrümmt sind. Die eigentlichen Reaktionskräfte heben sich innerhalb des im Druckkanal 33 befindlichen Bandbereiches 21' auf.

Nach Fig. 5 wird im Bereich der Befestigungsstelle 26 oben links das Zugband 21 quer durch einen zylindrischen Druckraum 17 hindurchgeführt, wodurch der diesen Druckraum 17 durchquerende Bereich 21'' des Zugbandes 21 den Raum in zwei Teilräume 17', 17'' aufteilt.

Der im Druckkanal 33 verlaufende Bereich 21' des Zugbandes 21 dient lediglich der gegenseitigen Abstützung der sich in den Bandlaufräumen 23 befindenden Teile der Zugbänder 21.

Gemäß Fig. 5 kann an der konvexen Seite der Dichtwände 29 noch eine Nut 34 vorgesehen sein, welche gewährleistet, daß sich am Beginn des Betriebs, wo die Zugbänder 21 noch dicht auf der konvexen Seite der Dichtwände 29 aufliegen, der vom Druckraum 17 kommende Druck sich sofort über die gesamte radiale Erstreckung der Zugbänder 21 ausbreitet.

In Fig. 5 ist auch noch gezeigt, daß ein radial innenliegender Bereich der Dichtwände 29 um ein Gelenk 67 in Pfeilrichtung am anderen Teil angebracht sein kann.

Hierdurch kann nach einer Auslösung der wegklappbare innere Dichtwandbereich weggeklappt werden, wodurch das anhand der Fig. 7, 8 beschriebene selbsttätige Aushängen der Bandenden aus den Umfangsausnehmungen in der Antriebsrolle 22 auch im Bereich der Dichtwände 29 nicht behindert wird.

Damit der radial innere Teil der Dichtwände 29 nach Fig.5 bei Druckabfall im Anschluß an eine Straffung in Richtung der Pfeile wegklappt, muß zwischen den beiden zueinander klappbaren Teilen der Dichtwand 29 eine nicht dargestellte Spreizfeder vorgesehen sein.

Eine solche Spreizfeder kann bei dem Ausführungsbeispiel nach Fig. 5a vermieden werden, indem die Dichtwände 29 über eine geeignet geformte Trennstelle 72 und über einen gehäusefesten Anschlag 24' durch die Zugspannung des daraufliegenden Zugbandes 21 festgehalten wird. Aufgrund dieser Ausbildung werden die Dichtwände 29 im Normalzustand durch geeignete Verspannung der Antriebsrolle 22 von dem unter Zugspannung stehenden Zugband 21 gegen die Trennstelle 72 und den Anschlag 24' gedrückt.

Bei einer Zündung der pyrotechnischen Ladung drückt der dann in dem Teilraum 23' vorhandene Druck die Dichtwände 29 gegen die Trennstelle 72 und den Anschlag 24'. Erst wenn dann die Zugbänder 21 weitgehend von der Antriebsrolle 22 abgewickelt sind und der Druck in den Teilräumen 23' wieder abfällt, drücken die sich jetzt entspannenden Lagen der Zugbänder 21 auf der Antriebsrolle 22 gegen die Dichtwände 29, so daß diese entlang der Trennstelle 72 und des Anschlags 24' in Richtung des Pfeiles 73 gleiten und somit die Entspannung der Lagen der Zugbänder 21 auf der Antriebsrolle 22 nicht behindern. Auf diese Weise können sich die auf dem Umfang der Antriebsrolle 22 drehfest eingehängten Enden der Zugbänder 21 selbsttätig federnd aus den Vertiefungen, in die sie eingehängt sind, auch dann lösen, wenn diese Einhängestellen sich gerade gegenüber der Dichtlippe 31 einer Dichtwand 29 befinden.

Der Erfindungsgedanke dieser Ausführungsform ist also darin zu sehen, daß die Dichtwände 29 derart lösbar am Gehäuse 24 angebracht sind, daß sie durch das unter Zugspannung stehende Zugband 21 oder den Druck im Teilraum 23' in ihrer Sollage gehalten werden, jedoch bei nicht mehr aufliegendem Zugband 21 und abfallendem Druck durch die sich entspannenden Windungen der Zugbänder 21 auf der Antriebsrolle 22 selbsttätig vom Gehäuse 24, 24' lösen.

Die in Fig. 5 dargestellten Befestigungsbohrungen 70 dienen zum axialen Verspannen der einzelnen Gehäuse von Zusatzantrieb 15, Kupplung 20 und Rückzugsfederanorddnung 14' sowie des Gestells 11 der Gurtaufwickelrolle 12.

Durch die erfindungsgemäße Ausbildung kann die Straffung des Sicherheitsgurtes um 140 bis 205 mm in etwa 10 msec nach Auslösung der pyrotechnischen Ladung erreicht werden.

Die Zugbänder 21 sind in der Ausgangsposition drei- bis viermal um die Antriebswelle 19 bzw. Antriebsrolle 22 herumgewunden. Durchmesser der Antriebswelle 19 bzw. Antriebsrolle 22 und Zahl der Windungen der Zugbänder 21 darauf hängen von der gewünschten Auszugslänge bei Straffung ab. Außerdem ist darauf zu achten, daß, nachdem die Bandschlaufen den Bandlaufraum 23 vollständig durchlaufen haben, noch ein bis zwei Windungen auf der Antriebswelle 19 bzw. Antriebsrolle 22 vorhanden sind, damit das selbsttätige Aushängen der Bandenden aus der Umfangsvertiefung 36 (Fig. 7) nicht vorzeitig erfolgt. Die mindestens ein bis zwei Windungen auf der Antriebswelle 19 bzw. der Antriebsrolle 22 sind also nötig, um, solange Zug auf den Zugbändern 21 ist, die Federzunge 35 oder ein sonstiges Einhängeglied sicher in eine entsprechende Vertiefung 36 der Antriebswelle 19 bzw. Antriebsrolle 22 sicher hineinzudrücken.

Während grundsätzlich statt zweier diametral gegenüberliegender Zugbänder 21, die auf ein und dieselbe Antriebswelle 19 bzw. Antriebsrolle 22 wirken, auch mehrere derartige Anordnungen über den Umfang verteilt verwendet werden könnten, kommt aus baulichen Gründen eine Verwendung von mehr als vier über den Umfang verteilten Zugbändern 21 mit entsprechenden Dichtwänden 29 nicht in Betracht. Optimal ist auf jeden Fall die Verwendung von zwei diametral gegenüberliegenden Zugbändern 21 mit entsprechenden Dichtwänden 29, weil bereits hierdurch die Lagerkräfte an der Antriebswelle 19 bzw. Antriebsrolle 22 weitgehend beseitigt werden.

## Patentansprüche

1. Gurtstraffer bei Sicherheitsgurtanordnungen in Kraftfahrzeugen mit einem am Fahrzeugchassis zu befestigenden Halter (11), an dem drehbar eine Gurtaufwickelrolle (12) mit einem darauf aufgewickelten Sicherheitsgurt (13), eine Rückzugsfederanordnung (14, 14'), mittels der der Sicherheitsgurt (13) ständig in Einziehrichtung leicht so vorgespannt ist, daß er nur locker am von ihm gesicherten Fahrzeuginsassen anliegt, einer Feststellanordnung, insbesondere zwischen Gurtaufwickelrolle (12) und Halter (11) oder Fahrzeugchassis, welche den Sicherheitsgurt (13) bei plötzlichem Anziehen und/oder einer unfallbedingten Beschleunigung gegen Ausziehen sperrt, und mit einem über eine Kupplung (20) an die Gurtaufwickelrolle (12) angeschlossenen Zusatzantrieb (15), welcher normalerweise durch die ausgerückte Kupplung (20) von der Gurtaufwickelrolle (12) antriebsmäßig getrennt ist, jedoch bei einer unfallbedingten Beschleunigung schlagartig aktiviert und über die dann eingerückte Kupplung (20) drehfest mit der Gurtaufwickelrolle (12) gekuppelt wird, um den Sicherheitsgurt (13), noch bevor der von ihm gesicherte Fahrzeuginsasse in den Sicherheitsgurt (13) hineinfällt, um ein solches Wegstück aufzurollen, daß der Sicherheitsgurt straff am Fahrzeuginsassen anliegt, wobei der Zusatzantrieb (15) vorzugsweise eine beim unfallbedingten Ansprechen eines Beschleunigungssensors auslösbare bzw. zündbare, insbesondere pyrotechnische Druckquelle (16), welche bei Auslösung in einem Druckraum (17) schlagartig einen hohen Druck aufbaut, eine von dem Druck im Druckraum (17) beaufschlagte Drehmomenterzeugungsvorrichtung (18) und eine an diese angeschlossene Antriebswelle (19) aufweist, die über die Kupplung (20) drehfest mit der Gurtaufwickelrolle (12) verbindbar ist,
dadurch gekennzeichnet,
daß die Kupplung (20) durch den bei Auslösung der Druckquelle (16) erzeugten Druck einrückbar ist und der Zusatzantrieb (15) durch eine Ventilanordnung (59, 64, 65) noch solange von der Druckquelle getrennt ist, bis die Kupplung (20) eingerückt ist.

2. Gurtstraffer nach Anspruch 1, dadurch gekennzeichnet, daß die Kupplung (20) einen durch den Druck der Druckquelle verschiebbaren Schieber (48) aufweist, der beim Verschieben durch den Druck der Druckquelle das Einrücken der Kupplung (20) bewirkt, wobei insbesondere der Schieber (48) das Einrücken der Kupplung (20) nur steuert, die Einrückkraft jedoch von einer gesonderten Kraftquelle (44) aufgebracht wird.

3. Gurtstraffer nach Anspruch 1 oder 2, dadurch gekennzeichnet, daß die Kupplung (20) einen ersten Kupplungsteil, insbesondere eine Kupplungsscheibe (44), die mit dem Zusatzantrieb (15) bzw. der Drehmomenterzeugungsvorrichtung (18) drehfest verbunden ist, und ein zweites Kupplungsteil, insbesondere eine mit der Gurtaufwickelrolle (12) drehfest verbundene Gegenscheibe, die vorzugsweise durch die eine Stirnführungsscheibe (47) der Gurtaufwickelrolle (12) gebildet ist, aufweist, wobei insbesondere das erste Kupplungsteil (44) zumindest teilweise axial verschiebbar ist, um mit der Gegenscheibe (47) in Eingriff kommen zu können und bevorzugt außerdem das erste Kupplungsteil (44) durch Federkraft mit dem zweiten Kupplungsteil (47) in Eingriff bringbar ist, jedoch bis zur Auslösung gegen die Federkraft festgehalten ist sowie zweckmäßigerweise weiter das erste Kupplungsteil eine Kupplungsscheibe (44) ist, die durch Federkraft auf die Gegenscheibe (47) zu vorgespannt ist und vorzugsweise außerdem die Kupplungsscheibe (44) vorzugsweise an ihrem Außenumfang durch eine Bajonettverschlußverbindung (50, 57) normalerweise gegen Federkraft in ausgerückter Lage gehalten ist, und daß durch Relativverdrehung von Kupplungsgehäuse (58) und Kupplungsscheibe (44) der Bajonettverschluß (50, 57) lösbar ist.

4. Gurtstraffer nach Anspruch 3, dadurch gekennzeichnet, daß die Kupplungsscheibe (44) selbst federnd ausgebildet ist und insbesondere aus Federstahlblech besteht und im Normalzustand zwischen Mitte und Außenumfang so zu einer im wesentlichen konischen Form verspannt ist, daß die Kupplung (20) ausgerückt ist, und daß bei Aufhebung der Verspannung z.B. durch Lösung, insbesondere Verdrehung des Bajonettverschlusses (50, 57) die Kupplungsscheibe (44) aufgrund der ihr innewohnenden Federkraft sich auf ihre insbesondere ebene Normalposition zu verformt und dadurch das Einrücken der Kupplung (20) ermöglicht, und/oder die Kupplung (20) eine Klauenkupplung ist, und/oder die Kupplungsscheibe (44) im Außenbereich Eingriffsausnehmungen (45) aufweist, denen an der Gegenscheibe (47) angeordnete, axial vorstehende Nocken (46) zugeordnet sind und/oder zwischen der Antriebswelle (19) bzw. der Antriebsrolle (22) und der Kupplungsscheibe (44) ein solches Umfangsspiel vorliegt, daß bei Verdrehung der Kupplungsscheibe (44) entgegen der Gurteinzugsrichtung zunächst der Bajonettverschluß (50, 57) geändert wird und dann noch eine Weiterdrehung der Kupplungsscheibe (44) bis zum Aufschnappen der Eingriffsausnehmungen (45) über die Eingriffsnocken (46) möglich ist, sofern diese Ausrichtung nicht schon beim Öffnen des Bajonettverschlusses (50, 57) vorliegt.

5. Gurtstraffer nach einem der Ansprüche 2 bis 4, dadurch gekennzeichnet, daß die Ventilanordnung durch den Schieber (48) und eine Ventilwandung (59) am Schieber (48) sowie die Einlaßöffnung (68) eines zum Druckraum (17) führenden Druckkanals (61) gebildet ist, wobei insbesondere die Ventilwandung (59) vom Schieber (48) durch den Druck der Druckquelle (16) wegbrechbar oder wegklappbar ist, sobald die Kupplung (20) eingerückt ist und insbesondere die Ventilwand (59) zur Eingangsöffnung (68) des Druckkanals verschoben ist, und/oder daß sich von der Gurtaufwickelrolle eine Innenwelle (41) durch die um die Drehachse (38) herum erstreckenden Hohlraum des Zusatzantriebs (15) und der Kupplung (20) bis zur Rückzugsfederanordnung (14') erstreckt und dort drehfest mit dieser verbunden ist und/oder alle drehenden Bauteile des Zusatzantriebes (15) und der Kupplung (20) und vorzugsweise auch der Rückzugsfederanordnung (14') koaxial zueinander und auf ein und derselben Stirnseite der Gurtaufwickelrolle (12) verlaufen und/oder der Schieber (48) in einer im wesentlichen tangential zur Kupplungsscheibe (44) verlaufenden Verschiebeausnehmung (49) tangential verschiebbar gelagert ist.

6. Gurtstraffer nach einem der vorhergehenden Ansprüche, dadurch gekennzeichnet, daß der Schieber einen vom Druck der Druckquelle (16) beaufschlagten Kolbenbereich (48') und auf der von der Druckbeaufschlagung abgewandten Seite eine vorzugsweise dünnere Betätigungsstange (48'') aufweist, die über einen von ihr seitlich vorstehenden Anschlag (62) mit einem am Umfang der Kupplungsscheibe (44) vorgesehenen Gegenanschlag (63) derart zusammenwirkt, daß beim Vorschieben der Betätigungsstange (48') im Falle der Druckbeaufschlagung des Kolbenbereiches (48') die Kupplungsscheibe (44) um einen solchen Winkel verdreht wird, daß die Kupplungsscheibe (44) aus der ausgerückten Sperrstellung in eine Position verdreht wird, in der die Federkraft die Kupplungsscheibe (44) in Eingriff mit der Gegenscheibe, insbesondere der Stirnführungsscheibe (47) der Gurtaufwickelrolle (12) bringen kann.

7. Gurtstraffer nach einem der vorhergehenden Ansprüche, dadurch gekennzeichnet, daß in einem ersten Stadium der durch den Schieber (48) bedingten Drehbewegung der Kupplungsscheibe (44) die Haltenocken (50) am Umfang der Kupplungsscheibe (44) sich von den Gegennocken (57) am Kupplungsgehäuse (58) lösen und in einem zweiten Stadium der Drehbewegung - sofern nach dem ersten Stadium die Eingriffsnocken (46) noch nicht mit den Eingriffsausnehmungen (45) in Eingriff gekommen sind - die Kupplungsscheibe durch den vorgeschobenen Schieber (48) weitergedreht wird, bis die Eingriffsausnehmungen (45) der Kupplungsscheibe (44) mit den Eingriffsnocken (46) der Gegenscheibe (47) axial in Ausrichtung gekommen sind, worauf die federnde Kupplungsscheibe über die Eingriffsnocken (46) schnappt.

8. Gurtstraffer nach Anspruch 6 oder 7, dadurch gekennzeichnet, daß bei einer Auslösung der Schieber (48) vorzugsweise über die Anschläge (62, 63) solange in Eingriff mit der Kupplungsscheibe (44) steht, bis der Bajonettverschluß (50, 57) geöffnet und die Eingriffsausnehmungen (45) und die Eingriffsnocken (46) in axiale Ausrichtung gekommen sind, und daß dann, wenn dies geschehen ist, der Antriebseingriff zwischen dem Schieber (48) und der Kupplungsscheibe (44) aufgehoben ist.

9. Gurtstraffer nach einem der vorhergehenden Ansprüche, dadurch gekennzeichnet, daß die zum Einrücken der Kupplung vorgesehene Drehbewegung der Kupplungsscheibe entgegengesetzt der von der Drehmomenterzeugungsvorrichtung hervorgerufenen Drehung ist und daß zwischen der Antriebswelle (19) bzw. der Antriebsrolle (22) und der Kupplungsscheibe (44), die bei Beaufschlagung durch die Drehmomenterzeugungsvorrichtung (18) drehfest gekuppelt sind, ein Umfangsspiel vorhanden ist, welches eine solche Verdrehung der Kupplungsscheibe (44) entgegen der Drehrichtung der Drehmomenterzeugungsvorrichtung (18) ermöglicht, daß die Haltenocken (50) der Kupplungsscheibe (44) mit den Gegennocken (57) am Gehäuse außer Eingriff kommen und danach durch weitere Drehung die Eingriffsausnehmungen (45) der Kupplungsscheibe (44) über die Eingriffsnocken (46) der Stirnführungsscheibe (47) der Gurtaufwickelrolle (12) schnappen können.
